# EUROPÄISCHE PATENTSCHRIFT

(11) **EP 3 297 503 B1**
(45) Veröffentlichungstag und Bekanntmachung des Hinweises auf die Patenterteilung: **10.07.2019**
(21) Anmeldenummer: 16727315.0
(22) Anmeldetag: 13.05.2016
(51) Int. Cl.: A47J 31/36

(54) **EINRICHTUNG ZUR ZUBEREITUNG VON KAFFEE IN EINER AUTOMATISCHEN KAFFEEMASCHINE**
APPARATUS FOR PREPARING COFFEE IN AN AUTOMATIC COFFEE MACHINE
DISPOSITIF POUR PRÉPARER DU CAFÉ DANS UNE MACHINE À CAFÉ AUTOMATIQUE

(30) Priorität: 18.05.2015 DE 102015006235
(43) Veröffentlichungstag der Anmeldung: 28.03.2018
(73) Patentinhaber: Barth, Volker, 63067 Offenbach am Main (DE)
(72) Erfinder: Barth, Volker, 63067 Offenbach am Main (DE)
(74) Vertreter: Huwer, Andreas
(86) Internationale Anmeldenummer: PCT/EP2016/060838
(87) Internationale Veröffentlichungsnummer: WO 2016/184803

(56) Entgegenhaltungen:
- EP-A2- 0 299 399

## Beschreibung

Die Erfindung betrifft eine Einrichtung zur Zubereitung von Kaffee in einer automatischen Kaffeemaschine, mit einem ein erstes und ein zweites Zylinderende aufweisenden Brühzylinder zur Aufnahme von Kaffeepulver, wobei dem Brühzylinder zwei in der Zylinderachse relativ zueinander verschiebbare Verschlussteile zugeordnet sind, um eine Brühkammer abzugrenzen und eingefülltes Kaffeepulver zu verdichten, wobei ein erstes Verschlussteil das erste Zylinderende verschließt und ein zweites Verschlussteil neben einer Schließstellung, in der er das zweite Zylinderende verschließt, eine Offenstellung einnehmen kann, um das zweite Zylinderende zum Ausstoßen des verbrauchten Kaffeepulvers durch das erste Verschlussteil freizugeben, wobei das erste Verschlussteil als Kolben mit einem Dichtabschnitt ausgebildet ist, der an einer Innenumfangswand des Brühzylinders zu Anlage kommt, mit einer Antriebsvorrichtung, mittels der die Verschlussteile relativ zueinander und relativ zum Brühzylinder hin und her bewegbar sind, derart, dass zum Verdichten des Kaffeepulvers eines der Verschlussteile in eine Vorschubrichtung relativ zu dem Brühzylinder in Richtung auf das andere Verschlussteil zu bewegbar ist, sowie mit Mitteln zum Zuführen von Wasser zu der Brühkammer und zum Abführen des gebrühten Kaffees aus der Brühkammer.

Eine derartige Einrichtung ist aus EP 0 299 399 B1 bekannt. Die Einrichtung hat einen mit seiner Zylinderachse horizontal angeordneten Brühzylinder, der eine seitliche Öffnung zum Einfüllen des Kaffeepulvers aufweist, welche von den beiden Zylinderenden des Brühzylinders beabstandet ist. Dem Brühzylinder sind zwei in der Zylinderachse relativ zueinander verschiebbare, als Kolben ausgestaltete Verschlussteile mit zugehörigen Kolbenstangen zugeordnet, um eine Brühkammer abzugrenzen und das eingefüllte Kaffeepulver zu verdichten. Ein erstes Verschlussteil verschließt ein erstes Zylinderende und ein zweites Verschlussteil kann neben einer Arbeitsstellung im Zylinder, bei welcher das zweite Verschlussteil das zweite Zylinderende verschließt, eine Stellung außerhalb des Brühzylinders einnehmen, um das zweite Zylinderende zum Ausstoßen des verbrauchten Kaffeepulvers durch das erste Verschlussteil freizugeben. Die Einrichtung weist eine Antriebsvorrichtung auf, die dazu dient, den Brühzylinder entlang einer Längsführung in gesteuerter Weise entlang seiner Achse zwischen vorbestimmten Stellungen hin und her zu bewegen. Während eines Arbeitsschritts, der zum Verdichten des Kaffeepulvers dient, fährt der Brühzylinder über das im Wesentlichen feststehende zweite Verschlussteil, wobei der Brühzylinder das erste Verschlussteils zwangsläufig mitschleppt, bis das eingefüllte Kaffeepulver zwischen den Verschlussteilen mit einer vorbestimmten Kraft verdichtet ist. Von dem Brühzylinder aus betrachtet bewegt sich das zweite Verschlussteil während dieses Arbeitsschritts in eine Vorschubrichtung in die Brühkammer hinein und auf das erste Verschlussteil zu. Während der entgegengesetzten Bewegungsrichtung bewegt sich der Brühzylinder unter Freigabe des zweiten Zylinderendes vom zweiten Verschlussteil herunter. Dabei trifft in einer vorbestimmten Stellung des Brühzylinders das freie Ende einer mit dem ersten Verschlussteil verbundenen Kolbenstange auf einen festen Anschlag auf, wodurch das erste Verschlussteil arretiert wird. Da der Brühzylinder danach weiterhin in die entgegengesetzte Bewegungsrichtung bewegt wird, wird die verbrauchte Kaffeepulverportion vom ersten Verschlussteil aus dem offenen zweiten Zylinderende ausgestoßen.

Nun wird heißes Wasser durch das verdichtete Kaffeepulver geleitet, um den gebrühten Kaffee zu erzeugen. Dies erfolgt durch einen Einlasskanal in der Kolbenstange des ersten Verschlussteils und durch im ersten Verschlussteil angeordnete Einlassöffnungen hindurch, die mit einem Einlasssieb abgedeckt sind. Der auf diese Weise gebrühte Kaffee wird durch ein im zweiten Verschlussteil angeordnetes Auslasssieb aus der Brühkammer abgeleitet. Hinter dem Auslasssieb sind Auslassöffnungen angeordnet, die mit einem Auslasskanal verbunden sind, der eine Kolbenstange des zweiten Verschlussteils durchsetzt.

Die vorbekannte Einrichtung hat den Nachteil, dass das zu einem Kuchen verdichtete Kaffeepulver ungleichmäßig vom Wasser durchströmt wird. Insbesondere kann es passieren, dass der Kuchen, an seinen zu der Innenumfangswand des Brühzylinders benachbarten Randbereichen einen geringeren Strömungswiderstand aufweist als im Zentrum des Kuchens. Dies kann dazu führen, dass an Stellen, die nicht oder nur schlecht vom Wasser durchströmt werden, die in dem Kaffeepulver enthaltenen Aromastoffe, nicht oder nur teilweise in den gebrühten Kaffee extrahiert werden. Dies führt zu einem erhöhten Verbrauch von Kaffeepulver und/oder zu einer Reduzierung des Aromas des gebrühten Kaffees.

Es besteht deshalb die Aufgabe, eine Einrichtung der eingangs genannten Art zu schaffen, die eine gute und gleichmäßige Extraktion des in dem Kaffeepulver enthaltenen Aromas in den gebrühten Kaffee ermöglicht.

Erfindungsgemäß wird diese Aufgabe mit den im Anspruch 1 angegebenen Merkmalen gelöst. Diese sehen vor, dass die Innenumfangswand des Brühzylinders in einem Abschnitt der Brühkammer, in dem das Kaffeepulver zu einem Kuchen verdichtbar ist, eine Querschnittsreduzierung aufweist, an der sich der Querschnitt der Brühkammer in Vorschubrichtung verengt, und dass der Dichtabschnitt des ersten Verschlussteils derart elastisch ausgestaltet ist, dass das erste Verschlussteil in dem die Querschnittsreduzierung aufweisenden Abschnitt der Brühkammer positionierbar ist.

In vorteilhafter Weise wird durch die Querschnittsreduzierung des Brühzylinders das Kaffeepulver sowohl beim Verdichten zu dem Kuchen als auch während des Brühvorgangs stärker an die Innenumfangswand des Brühzylinders angepresst. Dadurch ergibt sich im Vergleich zu einer Einrichtung, die einen entsprechenden herkömmlichen Brühzylinder ohne Querschnittsreduzierung aufweist, in dem der Innenumfangswand zugewandten Randbereich des Kuchens eine stärkere Verdichtung des Kaffeepulvers. Durch diese Maßnahme wird einer Abnahme des Strömungswiderstands am Randbereich des Kaffee-Kuchens entgegengewirkt, wodurch während des Brühvorgangs eine sehr gleichmäßige Durchströmung des Kaffee-Kuchens mit Wasser erreicht wird. Somit kann das in dem Kaffeepulver enthaltene Aroma sehr gleichmäßig aus dem Kaffeepulver extrahiert werden. Die erfindungsgemäße Einrichtung ermöglicht die Herstellung von Kaffee in einer Qualität, die mit der Qualität eines mit einer Siebträgermaschine hergestellten Kaffees vergleichbar ist. Gegenüber einer Siebträgermaschine hat die erfindungsgemäße Einrichtung aber den Vorteil, dass sie auf einfache Weise auch in einer vollautomatischen Kaffeemaschine verwendet werden kann.

Bei einer bevorzugten Ausgestaltung der Erfindung weist die Querschnittsreduzierung eine Schrägfläche auf, entlang welcher der Querschnitt der Brühkammer in Vorschubrichtung kontinuierlich und vorzugsweise stetig abnimmt. Dies ermöglicht eine einfache kostengünstige Herstellung des Brühzylinders.

Vorteilhaft ist, wenn die Schrägfläche in der Mantelfläche eines gedachten Kegels angeordnet ist, dessen Rotationsachse in der Zylinderachse des Brühzylinders liegt. Der Querschnitt der Brühkammer nimmt dann an der Schrägfläche nach allen Seiten gleichmäßig ab, was ein gute Abdichtung der Schrägfläche gegen den Dichtabschnitt des ersten Verschlussteils und eine gleichmäßige mechanische Beanspruchung des Dichtabschnitts ermöglicht.

Bei einer Weiterbildung der Erfindung ist die Zylinderachse des Brühzylinders unter einem Neigungswinkel gegenüber einer Horizontalebene geneigt, wobei der Neigungswinkel derart an die Querschnittsreduzierung angepasst ist, dass die Innenumfangswand des Brühzylinders entlang einer Linie, die der senkrechten Projektion der Zylinderachse des Brühzylinders auf die die Innenumfangswand entspricht, im Bereich der Querschnittsreduzierung zum zweiten Zylinderende hin abfällt. Der gebrühte Kaffee, der sich in der Brühkammer befindet, kann dann bei in Offenstellung befindlichem zweiten Verschlussteil über die Querschnittsreduzierung vollständig durch das zweite Zylinderende hindurch aus der Brühkammer ablaufen. Dies kann insbesondere dadurch erreicht werden, dass der Neigungswinkel des Brühzylinders größer ist als der Winkel, der in einer radial zur Zylinderachse des Brühzylinders angeordneten Ebene zwischen der Schrägfläche bzw. deren gerader Verlängerung und der Zylinderachse eingeschlossen ist.

Bei einer zweckmäßigen Ausgestaltung ist der Neigungswinkel zwischen der Zylinderachse und der Horizontalebene kleiner als 89°, ggf. kleiner als 30°, insbesondere kleiner als 20°, gegebenenfalls kleiner als 10° und beträgt bevorzugt zwischen 1° und 7°. Dabei ermöglich ein kleiner Neigungswinkel eine kompaktere Bauform der Kaffeemaschine, insbesondere wenn der Brühzylinders mit seiner Zylinderachse quer zur Front der Kaffeemaschine angeordnet ist.

Bei Bedarf kann der Brühzylinder am zweiten Zylinderende eine Einführschräge für das zweite Verschlussteil aufweisen, an welcher sich der Innenquerschnitt des Brühzylinders zum zweiten Zylinderende hin erweitert, wobei die Querschnittsreduzierung zwischen der Einführschräge und dem ersten Zylinderende angeordnet ist. Durch diese Maßnahme kann das zweite Verschlussteil leichter mittig zur Zylinderachse des Brühzylinders an der zweiten Zylinderöffnung positioniert werden.

Bei einer zweckmäßigen Ausgestaltung der Erfindung weisen die Mittel zum Zuführen des Wassers in die Brühkammer an dem einen Verschlussteil ein mit einer Wasserzuleitung verbundenes Einlasssieb auf, und/oder die Mittel zum Abführen des gebrühten Kaffees aus der Brühkammer weisen an dem zweiten Verschlussteil ein Auslasssieb auf, durch welches der gebrühte Kaffee aus der Brühkammer ableitbar ist. Bevorzugt ist das Einlasssieb am ersten Verschlussteil und das Auslasssieb am zweiten Verschlussteil angeordnet, insbesondere wenn die Zylinderachse des Brühzylinders unter einem Neigungswinkel gegenüber der Horizontalebene angeordnet ist. Es ist aber auch denkbar, dass das Auslasssieb am ersten Verschlussteil und das Auslasssieb am zweiten Verschlussteil vorgesehen ist, die Brühkammer also anders herum vom Wasser durchströmt wird.

Bei einer bevorzugten Ausgestaltung der Erfindung weist das erste Verschlussteil an seiner Mantelfläche eine Kolbendichtung aus einem Elastomerwerkstoff auf, wobei die Kolbendichtung eine Hohlkammer begrenzt, die zum Andrücken der Kolbendichtung an die Innenumfangswand des Brühzylinders mit einem pneumatischen und/oder hydraulischen Druck beaufschlagbar ist. Dabei ist es sogar möglich, dass die Hohlkammer mit der Wasserzuleitung verbunden ist, so dass beim Durchströmen des Kaffeemehls mit dem heißen Wasser die Kolbendichtung durch den Wasserdruck an die Innenwand des Brühzylinders angepresst wird. Die Kolbendichtung kann dann ihren Außendurchmesser leichter an die unterschiedlichen Querschnitte der Brühkammer im Bereich der Querschnittsreduzierung einerseits und zwischen der Querschnittsreduzierung und der ersten Zylinderöffnung andererseits anpassen und dichtet das erste Verschlussteil in seiner Extraktionsstellung dennoch gut gegen die Innenwand des Brühzylinders ab. Dies ermöglicht eine gute Abdichtung der Brühkammer und eine lange Standzeit bzw. Haltbarkeit der Kolbendichtung. Wenn die Hohlkammer nicht mit dem pneumatischen oder hydraulischen Druck beaufschlagt ist, ermöglicht die Kolbendichtung ein leichtgängiges Verschieben des ersten Verschlussteils in der Brühkammer entlang der Zylinderachse.

Vorteilhaft ist, wenn das erste Verschlussteil an seiner Mantelfläche eine Kolbendichtung aus einem Elastomerwerkstoff aufweist, und wenn der Elastomerwerkstoff derart ausgestaltet ist, dass sich zumindest in einem Abschnitt der Kolbendichtung deren Außenquerschnitt in Vorschubrichtung erweitert. Auch diese Maßnahme ermöglicht eine gute Abdichtung der Brühkammer und eine lange Standzeit der Kolbendichtung.

Vorteilhaft ist, wenn die Antriebsvorrichtung für jedes Verschlussteil jeweils einen hydraulischen Arbeitszylinder aufweist, der mit seinem einen Ende mit dem betreffenden Verschlussteil und mit seinem anderen Ende mit dem Brühzylinder verbunden ist. Dies ermöglicht eine kompakte und kostengünstige Antriebsvorrichtung, bei welcher die Brühkammer mit einem hohen Betriebsdruck beaufschlagt werden kann. Die hydraulischen Arbeitszylinder ermöglichen außerdem ein niedriges Betriebsgeräusch der Antriebsvorrichtung. Selbstverständlich können die Verschlussteile aber auch auf andere Weise angetrieben werden, beispielsweise mittels eines pneumatischen Antriebs oder mit Hilfe von Elektromotoren, insbesondere Servomotoren, die über ein Getriebe, einen Riemen oder dergleichen Übersetzung mit dem ihnen zugeordneten Verschlussteil in Antriebsverbindung stehen.

Bei einer zweckmäßigen Ausführungsform der Erfindung weist der Brühzylinder mindestens eine seitliche Einfüllöffnung zum Einfüllen des Kaffeepulvers auf, die von den Zylinderenden beabstandet ist. Durch diese Öffnung hindurch kann die Brühkammer mit einer Portion gemahlenen Kaffes befüllt werden. Diese kann beispielsweise über eine Rutsche von einer Kaffeemühle zu der Öffnung transportiert werden.

Nachstehend ist ein Ausführungsbeispiel der Erfindung näher erläutert. Es zeigt
- Fig. 1: eine Kaffeemaschine, bei der das Gehäuse teilweise demontiert ist, um die Sicht auf das Innere der Kaffeemaschine freizugeben,
- Fig. 2: eine perspektivische Darstellung eines Gehäuseteils, an dem ein Brühzylinder angeordnet ist,
- Fig. 3: einen Längsschnitt durch die in Fig. 2 gezeigte Anordnung,
- Fig. 4: einen Vertikallängsschnitt durch die Einrichtung zur Zubereitung von Kaffee entlang der Zylinderachse des Brühzylinders, wobei ein erstes Verschlussteil in einer zurückgezogenen Position und ein zweites Verschlussteil in einer Schließstellung angeordnet sind,
- Fig. 5: einen vergrößerten Ausschnitt aus Fig. 1, der eine Einrichtung zur Zubereitung von Kaffee zeigt,
- Fig. 6: eine Darstellung ähnlich Fig. 4, wobei jedoch das erste Verschlussteil in einer Extraktionsstellung angeordnet und in die Brühkammer eingefülltes Kaffeepulver zwischen den Verschlussteilen zu einem Kaffee-Kuchen verdichtet ist,
- Fig. 7: einen vergrößerten Ausschnitt aus Fig. 4, der eine Stelle des Brühzylinders zeigt, an welcher der Querschnitt einer von der Innenumfangswand des Brühzylinders umgrenzten Brühkammer reduziert ist,
- Fig. 8: eine Aufsicht auf die der Brühkammer zugewandte Innenfläche des ersten Verschlussteils,
- Fig. 9: eine Aufsicht auf die der Brühkammer zugewandte Innenfläche des zweiten Verschlussteils,
- Fig. 10: eine Darstellung ähnlich Fig. 6, wobei jedoch das erste Verschlussteil in einer Ausstoßposition und das zweite Verschlussteil in einer Offenstellung angeordnet sind,
- Fig. 11: eine Darstellung ähnlich Fig. 6, wobei jedoch das zweite Verschlussteil in der Offenstellung angeordnet ist,
- Fig. 12: eine Teilseitenansicht des in der Brühkammer befindlichen ersten Verschlussteils, auf der ein Dichtbereich des ersten Verschlussteils zu sehen ist, und

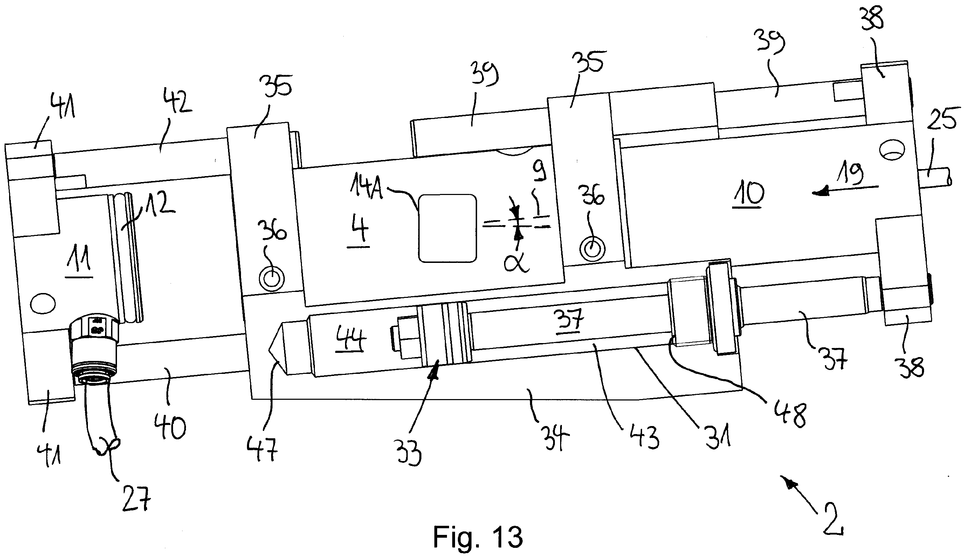

- Fig. 13: eine Seitenansicht der Einrichtung zur Zubereitung von Kaffee, bei der ein Zylinderteil eines hydraulischen Arbeitszylinders im Längsschnitt dargestellt ist.

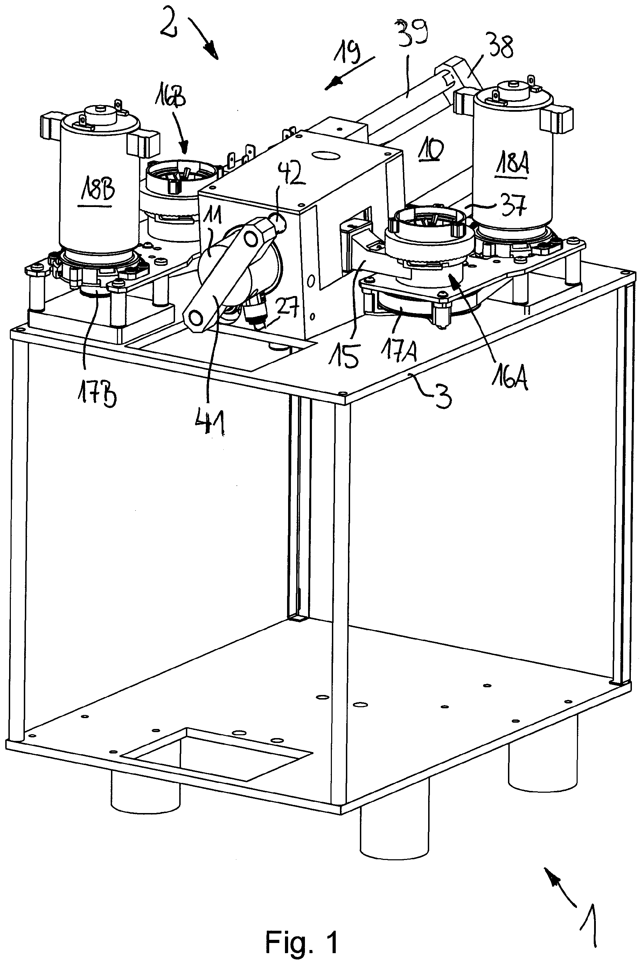

Eine automatische Kaffeemaschine 1 weist eine im Ganzen mit 2 bezeichnete Einrichtung zur Zubereitung von Kaffee auf, die auf einer in ein Gehäuse der Kaffeemaschine 1 integrierten Trägerplatte 3 angeordnet ist (Fig. 1).

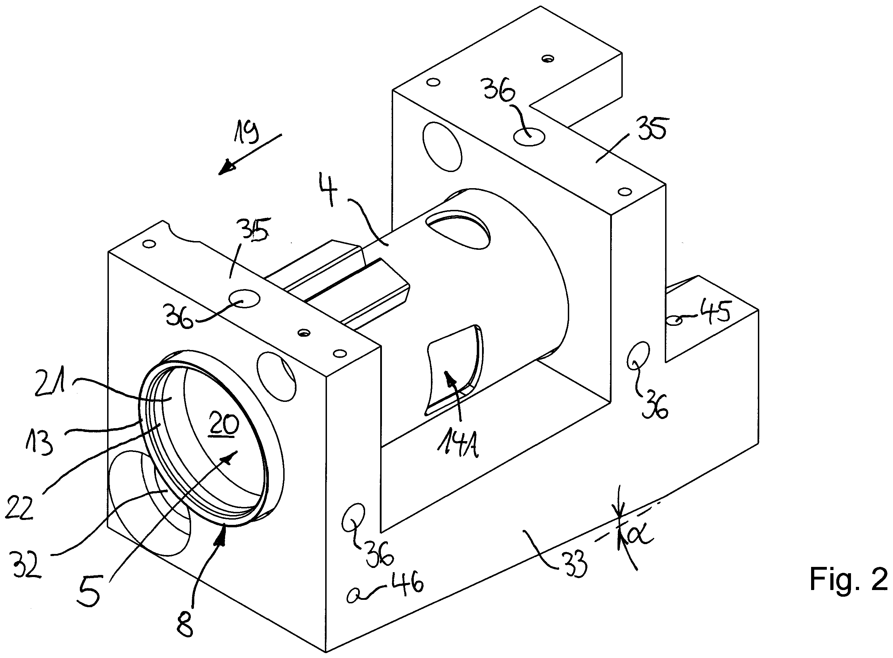

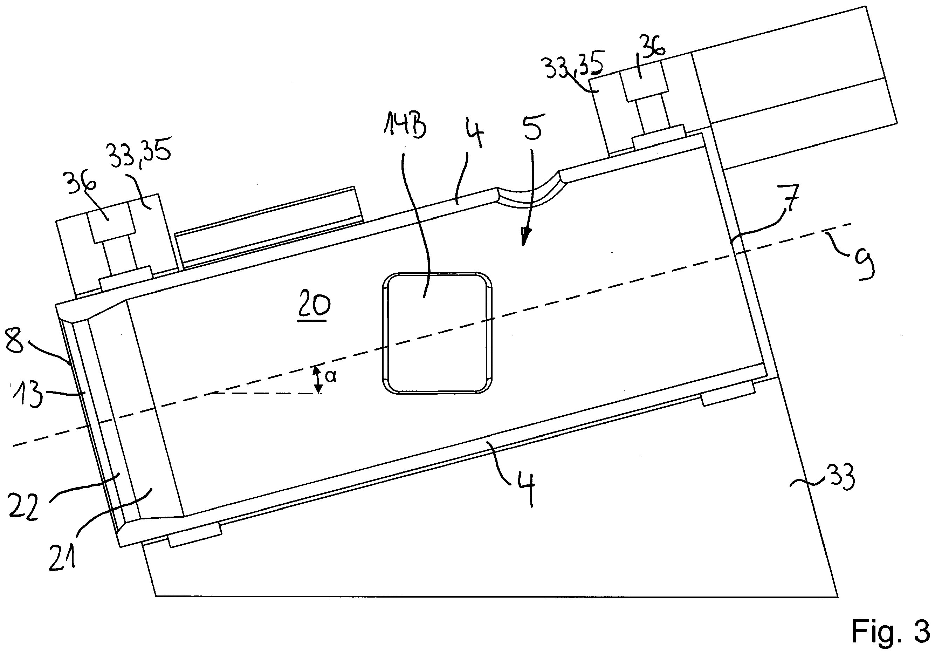

Wie in Fig. 2 und 3 erkennbar ist, hat die Einrichtung 2 einen Brühzylinder 4, der eine im Wesentlichen kreiszylindrische Brühkammer 5 zur Aufnahme von Kaffeepulver 6 begrenzt. Der Brühzylinder 4 hat zwei voneinander beabstandete Zylinderenden 7, 8, an denen jeweils eine Öffnung angeordnet ist. Der Brühzylinder 4 ist mit seiner Zylinderachse 9 derart unter einem Neigungswinkel a, der etwa 5° beträgt, gegenüber einer gedachten Horizontalebene geneigt, dass die Brühkammer 5 ausgehend von einem ersten Zylinderende 7 zu einem zweiten Zylinderende 8 des Brühzylinders 4 hin abfällt. Der Neigungswinkel a ist in Fig. 3 zur Verdeutlichung vergrößert dargestellt.

Dem Brühzylinder 4 sind zwei Verschlussteile 10, 11 zugeordnet, die mittels einer noch näher zu beschreibenden Antriebsvorrichtung entlang der Zylinderachse 9 Brühzylinders 4 aufeinander zu- und voneinander weg verschiebbar sind. Die Verschlussteile 10, 11 dienen dazu, die an den Zylinderenden 7, 8 befindlichen Öffnungen des Brühzylinders 4 zu verschließen, die Brühkammer 5 stirnseitig zu begrenzen und in die Brühkammer eingefülltes Kaffeepulver zu verdichten. Mit Hilfe der Antriebsvorrichtung sind die Verschlussteile 10, 11 außerdem jeweils relativ zu dem Brühzylinder 4 entlang der Zylinderachse 9 verschiebbar.

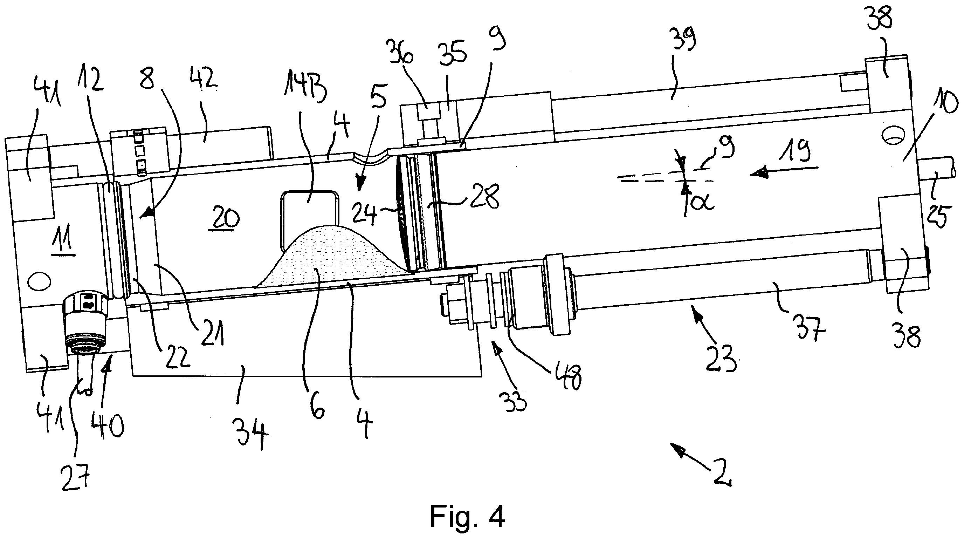

Wie in Fig. 4 erkennbar ist, verschließt ein erstes, als Kolben ausgestaltetes Verschlussteil 10 das erste Zylinderende 7. Ein zweites Verschlussteil 11 ist in eine in Fig. 4 abgebildete Schließstellung bringbar, in der er das zweite Zylinderende 8 verschließt. Dabei kommt ein am Umfang des zweiten Verschlussteils 11 konzentrisch zur Zylinderachse 9 angeordneter Dichtring 12 an einer am zweiten Zylinderende 8 vorgesehenen Einführschräge 13 dichtend zur Anlage.

Das erste Verschlussteil 10 ist mittels der Antriebsvorrichtung in eine in Fig. 4 dargestellte zurückgezogene Position bringbar, in der seitlich in der Wandung des Brühzylinders 4 vorgesehene Einfüllöffnungen 14A, 14B für das Kaffeepulver 6 zwischen den Verschlussteilen 10, 11 angeordnet sind.

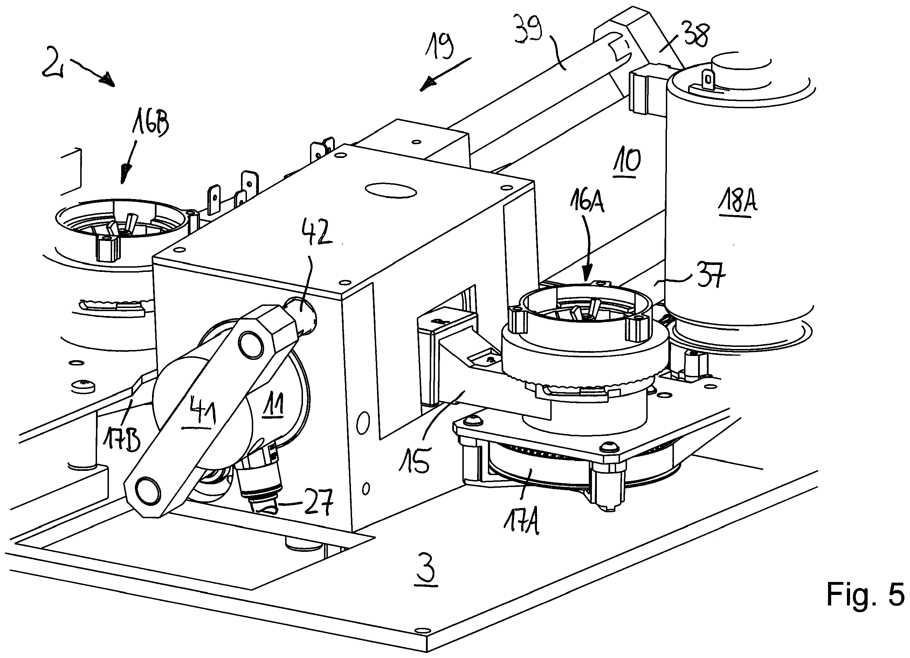

Wie in Fig. 5 erkennbar ist, ist eine erste Einfüllöffnung 14A über eine erste Rutsche 15 mit einem ersten Mahlwerk 16A einer ersten Kaffeemühle verbunden, mit der Kaffeebohnen, die in einem in Fig. 1 und 5 nicht näher dargestellten, über dem ersten Mahlwerk 16A angeordneten ersten Bohnenbehälter einfüllbar sind, gemahlen werden können. Das mittels des ersten Mahlwerks 16A erzeugte Kaffeepulver gelangt über die erste Rutsche 15 zu der ersten Einfüllöffnung 14A und von dort in die Brühkammer 5. Wie in Fig. 1 und 5 erkennbar ist, steht das erste Mahlwerk 16A über einen ersten Antriebsriemen 17A mit einem ersten elektrischen Antriebsmotor 18A in Antriebsverbindung.

An ihrer der ersten Einfüllöffnung 14A gegenüberliegenden Seite weist die Wandung des Brühzylinders 4 seitlich eine zweite Einfüllöffnung 14B auf, die über eine zweite Rutsche mit einem zweiten Mahlwerk 16A einer zweiten Kaffeemühle verbunden ist. Mit der zweiten Kaffeemühle können Kaffeebohnen, die in einem in Fig. 1 und 5 nicht näher dargestellten, über dem zweiten Mahlwerk 16B angeordneten zweiten Bohnenbehälter einfüllbar sind, zu Kaffeepulver gemahlen werden. Dieses gelangt über die zweite Rutsche zu der zweiten Einfüllöffnung 14B und von dort in die Brühkammer 5. Wie in Fig. 1 und 5 erkennbar ist, steht das zweite Mahlwerk 16A über einen zweiten Antriebsriemen 17B mit einem zweiten elektrischen Antriebsmotor 18B in Antriebsverbindung.

Mittels der beiden Kaffeemühlen und der diese jeweils zugeordnete Rutschen 15 kann die Brühkammer wahl- oder wechselweis mit Kaffeepulver unterschiedlicher Kaffeesorten beladen werden.

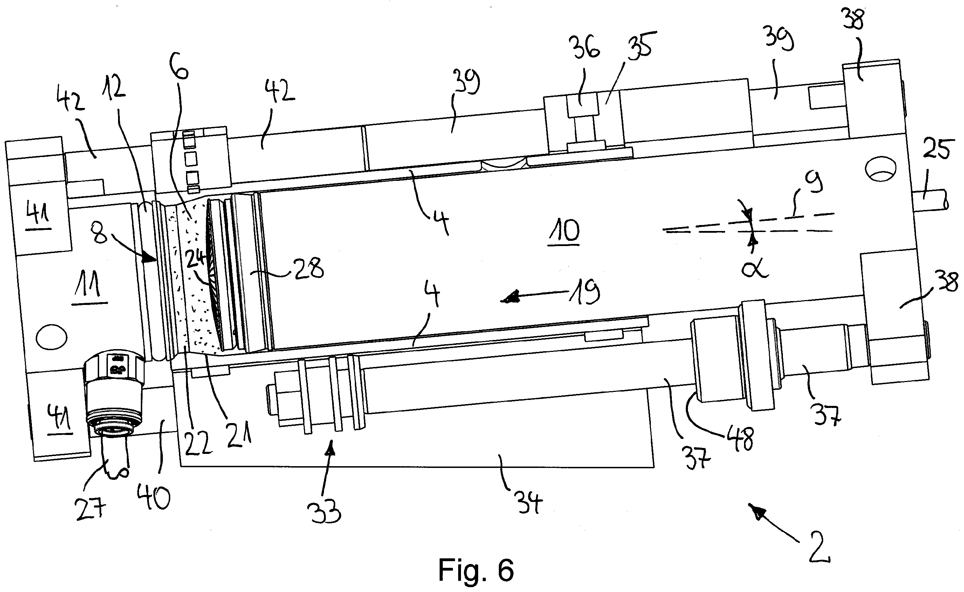

Nachdem das Kaffeepulver in die Brühkammer 5 eingefüllt wurde, wird das erste Verschlussteil 10 mittels der Antriebsvorrichtung aus seiner in Fig. 4 dargestellten zurückgezogenen Füllposition in die in Fig. 6 abgebildete Extraktionsstellung verstellt. Zu diesem Zweck wird das erste Verschlussteil 10 solange in eine Vorschubrichtung 19 auf das zweite Zylinderende 8 bzw. das an diesem positionierte zweite Verschlussteil 11 zubewegt, bis das Kaffeepulver 6 zwischen den beiden Verschlussteilen 10, 11 mit einer vorbestimmten Presskraft zu einem Kaffee-Kuchen gepresst ist. In dieser Extraktionsstellung befindet sich die dem zweiten Verschlussteil zugewandte Innenfläche des ersten Verschlussteils 10 zwischen den Einfüllöffnungen 14A, 14B des Brühzylinders 4 und dem zweiten Zylinderende 8 bzw. dem zweiten Verschlussteil 11.

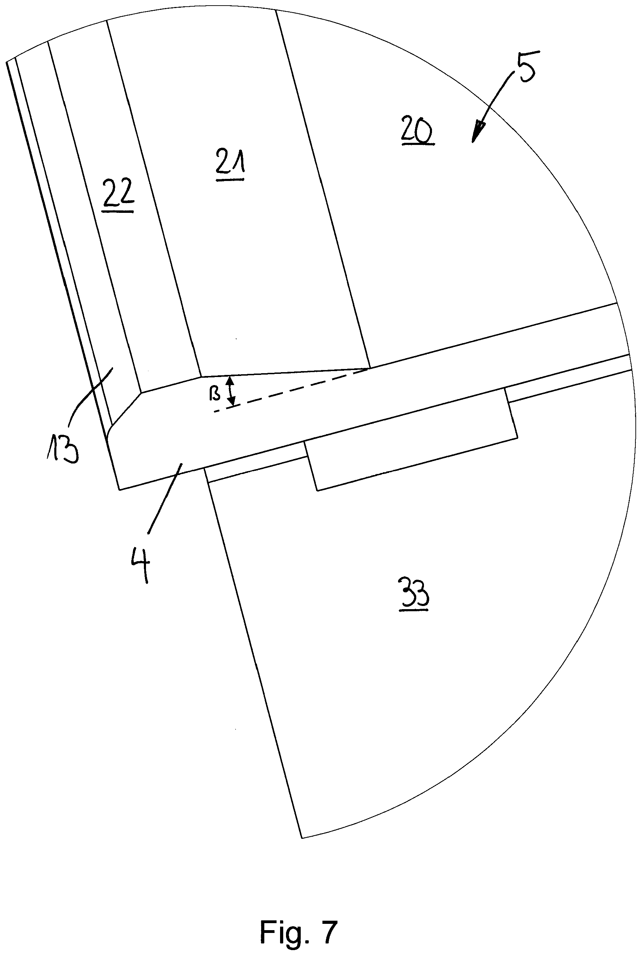

Wie in den Fig. 3 und 7 besonders gut erkennbar ist, weist die Innenumfangswand des Brühzylinders 4 einen zylindrischen Wandungsbereich 20 auf, der sich entlang der Zylinderachse 9 vom ersten Zylinderende 7 bis zu einer Querschnittsreduzierung 21 erstreckt, die benachbart zum zweiten Zylinderende 8 angeordnet ist. In Fig. 3 ist erkennbar, dass sich die Querschnittsreduzierung 21 zwischen der zweiten Einfüllöffnung 14B und dem zweiten Zylinderende 8 befindet.

Die Querschnittsreduzierung 20 weist eine Schrägfläche auf, die in der Mantelfläche eines gedachten Kegels angeordnet ist, dessen Mittelachse in der Zylinderachse 9 des Brühzylinders 4 liegt. Die Querschnittsreduzierung 21 ragt derart in das in gerader Verlängerung des zylindrischen Wandungsbereichs 20 angeordnete Zylindervolumen derart hinein, dass sich der Querschnitt der Brühkammer 5 in Vorschubrichtung 19 verengt. Die Die Querschnittsreduzierung 21 befindet sich an der Stelle, an der das in die Brühlammer 5 eingefüllte Kaffeepulver angeordnet ist, wenn es zu dem Kaffeekuchen verdichtet ist (Fig. 6). Dadurch wird der zwischen den Verschlussteilen 10, 11 eingespannte Kaffeekuchen fest an die Querschnittsreduzierung 21 angepresst.

Der Winkel ß, den die Schrägfläche in einer radial zur Zylinderachse 9 angeordneten Ebene mit der geraden Verlängerung des zylindrischen Wandungsbereichs 20 einschließt, ist kleiner als der Neigungswinkel a zwischen der Zylinderachse 9 und der gedachten Horizontalebene. Die Richtung, in der die Schrägfläche der Querschnittsreduzierung 21 geneigt ist, ist so gewählt, dass die Schrägfläche am Boden der Brühkammer zum zweiten Zylinderende 8 hin abfällt. Somit kann in der Brühkammer befindliches Wasser über die Schrägfläche zum zweiten Zylinderende 8 hin ablaufen. Der Winkel ß ist in Fig. 3 und 7 zur Verdeutlichung vergrößert dargestellt.

In Fig. 7 ist erkennbar, dass zwischen der Schrägfläche der Querschnittsreduzierung 20 und dem zweiten Zylinderende 8 ein zylindrischer Wandungsabschnitt 22 konzentrisch zur Zylinderachse 6 des zylindrischen Wandungsbereichs 20 angeordnet ist. Der Innendurchmesser des zylindrischen Wandungsabschnitts 22 ist etwas kleiner als der Innendurchmesser des zylindrischen Wandungsbereichs 20. Der zylindrische Wandungsabschnitt 22 hat in Richtung der Zylinderachse 6 eine kürzere Länge als die Schrägfläche der Querschnittsreduzierung 20. Zwischen dem zylindrischen Wandungsabschnitt 22 und dem zweiten Zylinderende 8 ist am Brühzylinder 4 die Einführschräge 13 vorgesehen, an der sich der Innendurchmesser der Brühkammer 5, ausgehend vom zylindrischen Wandungsabschnitt 22 zum zweiten Zylinderende 8 etwa auf den Innendurchmesserwert des zylindrischen Wandungsbereichs 20 erweitert. An der Einführschräge 13 kann sich das zweite Verschlussteil 11 zentrieren, wenn es aus seiner Offenstellung in seine Schießstellung verschoben wird.

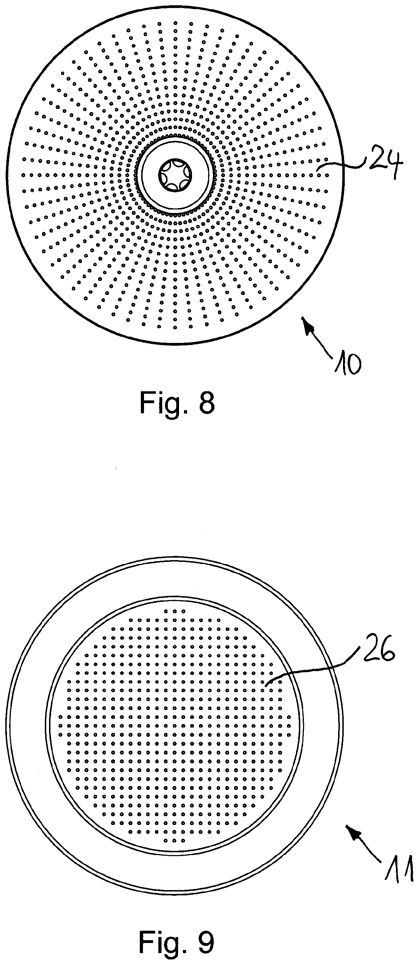

Nachdem das erste Verschlussteil 10 bei in Schließstellung befindlichem zweiten Verschlussteil 11 in der Extraktionsstellung positioniert wurde, wird eine vorbestimmte Menge heißes Wasser durch die Brühkammer 5 geleitet. In das erste Verschlussteils 10 ist zu diesem Zweck ein Wasser-Einlasskanal integriert, der an seinem der Brühkammer 5 zugewandten Austrittsende mit einem Einlasssieb 24 (Fig. 8) abgedeckt ist, das für das Wasser, nicht aber für das Kaffeepulver 6 durchlässig ist. Der Einlasskanal ist mit einer Wasserzuleitung 25 verbunden, in der ein Heißwasserbereiter und eine Hochdruck-Pumpe angeordnet sind, die in der Zeichnung nicht näher dargestellt sind. Der Heißwasserbereiter kann als temperaturgeregelter Boiler oder Durchlauferhitzer ausgestaltet sein, der das Wasser auf eine Brühtemperatur erhitzt, die vorzugsweise zwischen 90 °C und 94 °C beträgt.

Zum Ableiten des gebrühten Kaffees aus der Brühkammer 5 ist in das zweite Verschlussteil 11 ein Auslasskanal integriert, der an seinem der Brühkammer 5 zugewandten Eintrittsende mit einem Auslasssieb 26 (Fig. 9) abgedeckt ist, das für den gebrühten Kaffee, nicht aber für das Kaffeepulver 6 durchlässig ist. Der Auslasskanal ist über eine Kaffeeleitung 27 mit einer in der Zeichnung nicht näher dargestellten Auslassöffnung für den gebrühten Kaffee verbunden. Unter der Auslassöffnung kann beispielsweise eine Tasse oder eine Kaffeekanne positioniert werden.

Die Pumpe, der Heißwasserbereiter, die Antriebsvorrichtung und ein in der Wasserzuleitung 25 angeordneter Volumenstromsensor sind mit einer elektrischen Steuerung verbunden. Sobald das zweite Verschlussteil 11 die Extraktionsstellung erreicht hat, wird die Pumpe über die Steuerung eingeschaltet. In der Steuerung wird aus dem Messsignal des Volumenstromsensors die zugeführte Wassermenge ermittelt und mit einem Referenzwert verglichen. Wenn die ermittelte Wassermenge den Referenzwert erreicht, wird die Pumpe über die Steuerung abgeschaltet.

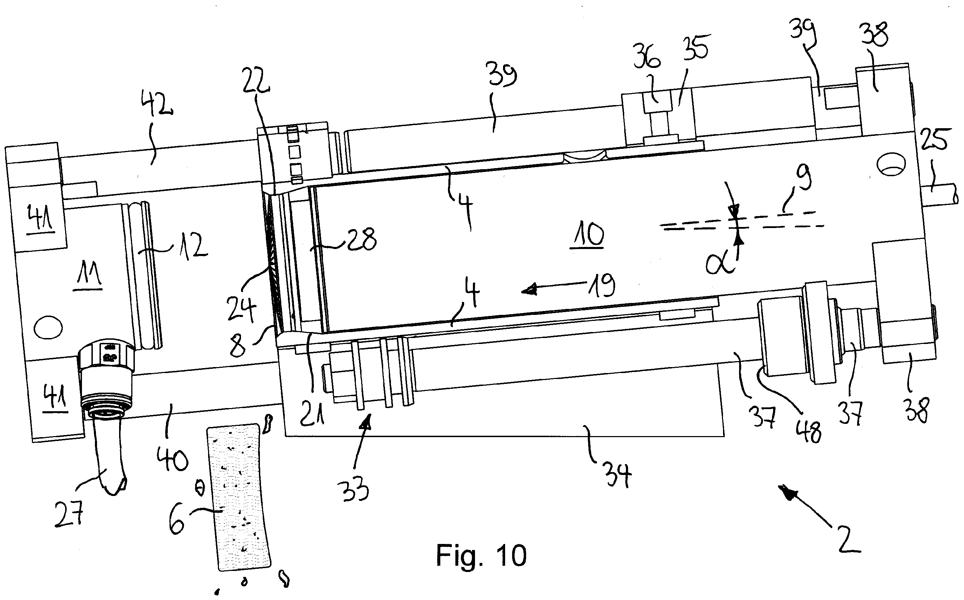

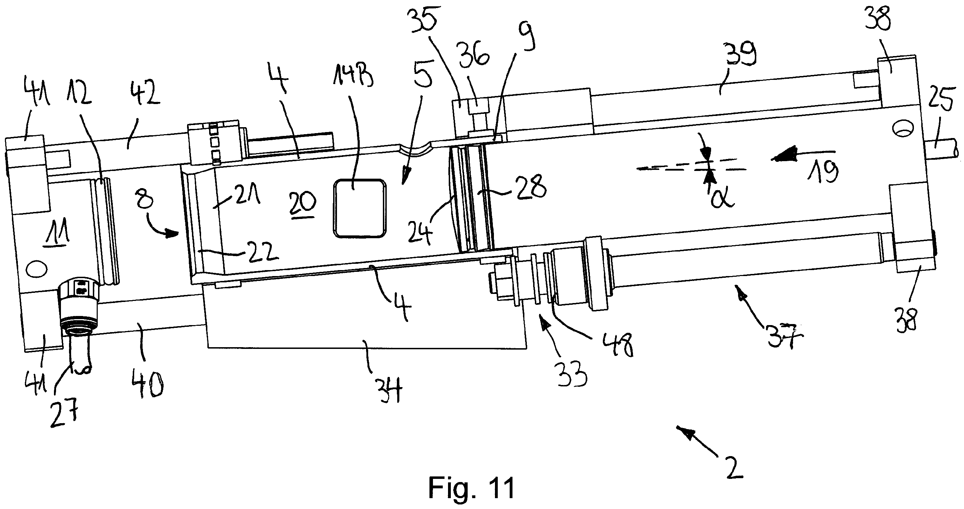

In einem weiteren Arbeitsschritt wird das verbrauchte Kaffeepulver 6 aus der Brühkammer 5 ausgestoßen. Zu diesem Zweck wird das zweite Verschlussteil 11 mittels der Antriebsvorrichtung aus der in Fig. 6 abgebildeten Schließstellung in die in Fig. 10 gezeigte Offenstellung verschoben, in welcher das zweite Verschlussteil 11 von der Brühkammer 5 beabstandet ist und das zweite Zylinderende 8 freigibt. Außerdem wird das erste Verschlussteil 10 aus der Extraktionsstellung in Vorschubrichtung 19 in eine Ausstoßstellung (Fig. 8) verschoben, in welcher das dem zweiten Verschlussteil 11 zugewandte Ende des ersten Verschlussteils 10 am zweiten Zylinderende 8 des Brühzylinders 4 angeordnet ist. Dabei wird das verbrauchte Kaffeepulver 6 vom ersten Brühkolben 10 aus der Brühkammer 5 verdrängt, so dass es in einen in der Zeichnung nicht näher dargestellten Tresterbehälter fällt, der unter dem Brühzylinder 4 angeordnet ist. Danach wird das erste Verschlussteil 10 in die Füllposition verschoben (Fig. 11) und das zweite Verschlussteil 11 wird in die Schließstellung gebracht (Fig. 4), um bei Bedarf eine weitere Portion Kaffeepulver 6 in die Brühkammer 5 einzufüllen.

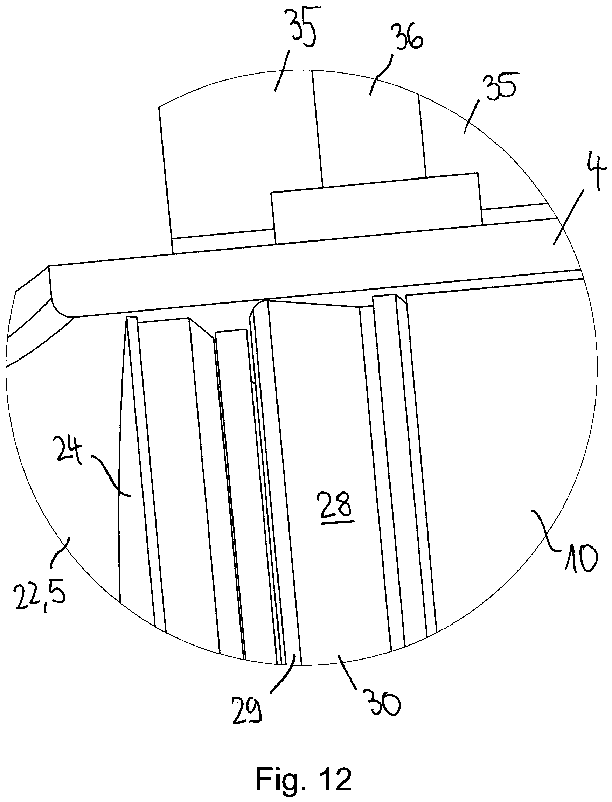

Wie in Fig. 12 besonders gut erkennbar ist, weist das erste Verschlussteil 10 an seinem dem zweiten Verschlussteil 11 zugewandten Endbereich einen zur Zylinderachse 9 konzentrischen Dichtabschnitt auf, an dem ein Kolbendichtring 28 angeordnet ist, der aus einem elastischen Werkstoff besteht. Der Kolbendichtring 28 grenzt mit einer dem Brühzylinder 4 abgewandten Innenfläche an eine in dem ersten Verschlussteil 10 gebildete Hohlkammer an, die mit dem Wasser-Einlasskanal 24 verbunden ist und somit mit dem Wasserdruck beaufschlagbar ist. Der Kolbendichtring 28 wird somit durch den während des Brühvorgangs an dem Wasser-Einlasskanal 24 anstehenden Wasserdruck entgegen der Rückstellkraft des elastischen Werkstoffs des Kolbendichtrings 28 gegenüber einer Ausgangslage aufgeweitet und an die Innenumfangswand des Brühzylinders 4 angedrückt. Wenn am Ende des Brühvorgangs der Wasserdruck in der Hohlkammer entfernt wird, zieht sich der Kolbendichtring 28 zusammen und nimmt wieder seine Ausgangslage an, in der er leichtgängig entlang der Zylinderachse 6 relativ zum Brühzylinder 4 verschiebbar ist.

In Fig. 12 ist erkennbar, dass der Kolbendichtring 28 eine dem zweiten Verschlussteil 11 zugewandte, konzentrisch zur Zylinderachse 9 angeordnete erste Schräge 29 aufweist, an welcher der Durchmesser des Kolbendichtrings 28 in Vorschubrichtung 19 abnimmt. Zwischen der erste Schräge 29 und seinem von dem zweiten Verschlussteil 11 entfernten Ende hat der Dichtabschnitt eine zweite Schräge 30, an welcher der Durchmesser des Kolbendichtrings 28 in Vorschubrichtung 19 zunimmt. Die erste Schräge 29 hat in Richtung der Zylinderachse 6 eine kürzere Länge als die zweite Schräge 30.

Die Antriebsvorrichtung hat für jedes Verschlussteil 10, 11 jeweils einen hydraulischen Arbeitszylinder 23, der ein Zylinderteil 31, 32 aufweist, in dem jeweils ein Hydraulikkolben 33 parallel zur Zylinderachse 9 verschiebbar angeordnet ist. Die Zylinderteile 31, 32 sind jeweils einstückig mit einem den Brühzylinder 4 tragenden Halteteil 34 ausgebildet.

An das Halteteil 34 sind zwei in Richtung der Zylinderachse 9 voneinander beabstandete ringartige Spannelemente 35 angeformt, welche am Außenumfang des Brühzylinders 4 zur Anlage kommen. Die Spannelemente 35 sind mit Hilfe von Spannschrauben 36 an den Außenumfang des Brühzylinders 4 angepresst.

Ein erster Hydraulikkolben 33 eines dem ersten Verschlussteil 10 zugeordneten ersten Arbeitszylinders 23 ist über eine erste Kolbenstange 37 mit einem Endbereich einer ersten Brücke 38 verbunden, die die mit ihrem gegenüberliegenden anderen Endbereich mit einer ersten Führungsstange 39 einer ersten Linearführung verbunden ist. Die erste Brücke 38 ist quer zur Zylinderachse 9 des Brühzylinders 4 angeordnet. Die erste Führungsstange 39 ist mittels eines an dem Halteteil 34 vorgesehenen ersten Lagers parallel zur Zylinderachse 9 relativ zu dem Halteteil 34 verschiebbar. Zwischen der erste Kolbenstange 37 und der ersten Führungsstange 39 ist die erste Brücke 38 mit dem ersten Verschlussteil 10 verbunden.

Ein zweiter Hydraulikkolben eines dem zweiten Verschlussteil 11 zugeordneten zweiten Arbeitszylinders ist über eine zweite Kolbenstange 40 mit einem Endbereich einer zweiten Brücke 41 verbunden, die die mit ihrem gegenüberliegenden anderen Endbereich mit einer zweiten Führungsstange 42 einer zweiten Linearführung verbunden ist. Die zweite Brücke 41 ist quer zur Zylinderachse 9 des Brühzylinders 4 angeordnet. Die zweite Führungsstange 42 ist mittels eines an dem Halteteil 34 angeordneten zweiten Lagers parallel zur Zylinderachse 9 relativ zu dem Halteteil 34 verschiebbar. Zwischen der zweiten Kolbenstange 40 und der zweiten Führungsstange 42 ist die zweite Brücke 41 mit dem zweiten Verschlussteil 11 verbunden.

Jeder Arbeitszylinder 23 hat jeweils eine zylindrische Innenhöhlung, in welcher der Hydraulikkolben 35 des betreffenden Arbeitszylinders 23 parallel zur Zylinderachse 9 des Brühzylinders 4 verschiebbar angeordnet ist. Beidseits des Hydraulikkolbens 35 ist jeweils zwischen diesem und einer Stirnwand 47, 48 der Innenhöhlung eine Hydraulikkammer 43, 44 gebildet, die mit einer Hydraulikflüssigkeit befüllt ist. Die Hydraulikkammern 43, 44 sind jeweils über in das Halteteil 34 integrierte Hydraulikkanäle 45, 46, an denen in der Zeichnung nicht näher dargestellte Hydraulikleitungen angeschlossen sind, mit einer hydraulischen Druckquelle, wie zum Beispiel einer Hydraulikpumpe verbindbar. In den Hydraulikleitungen sind Ventile angeordnet, die mittels Hubmagneten oder dergleichen Stellelementen in eine Offen- und eine Schließstellung verstellbar sind. Die Stellelemente sind elektrisch mit der Steuerung verbunden und können mittels einem in der Steuerung ablaufenden Betriebsprogramms derart angesteuert werden, dass sich die Verschlussteile 10, 11 entsprechend einem vorgesehenen Bewegungsprofil relativ zum Brühzylinder 4 hin und her bewegen. Die Hydraulikkolben 35 sind also als Zweiwegekolben ausgebildet. Dies ermöglicht ein in beide Richtungen schnelles Verstellen der Verschlussteile 10, 11.

## Patentansprüche

1. Einrichtung (2) zur Zubereitung von Kaffee in einer automatischen Kaffeemaschine (1), mit einem ein erstes und ein zweites Zylinderende (7, 8) aufweisenden Brühzylinder (4) zur Aufnahme von Kaffeepulver (6), wobei dem Brühzylinder (4) zwei in der Zylinderachse (9) relativ zueinander verschiebbare Verschlussteile (10, 11) zugeordnet sind, um eine Brühkammer (5) abzugrenzen und eingefülltes Kaffeepulver (6) zu verdichten, wobei ein erstes Verschlussteil (10) das erste Zylinderende (7) verschließt und ein zweites Verschlussteil (11) neben einer Schließstellung, in der er es das zweite Zylinderende (8) verschließt, eine Offenstellung einnehmen kann, um das zweite Zylinderende (8) zum Ausstoßen des verbrauchten Kaffeepulvers (6) durch das erste Verschlussteil (10) freizugeben, wobei zumindest das erste Verschlussteil (10) als Kolben mit einem Dichtabschnitt ausgebildet ist, der an einer Innenumfangswand des Brühzylinders (4) zu Anlage kommt, mit einer Antriebsvorrichtung, mittels der die Verschlussteile (10, 11) relativ zueinander und relativ zum Brühzylinder (4) hin und her bewegbar sind, derart, dass zum Verdichten des Kaffeepulvers (6) eines der Verschlussteile (10) in eine Vorschubrichtung (19) relativ zu dem Brühzylinder (4) in Richtung auf das andere Verschlussteil (11) zu bewegbar ist, sowie mit Mitteln zum Zuführen von Wasser zu der Brühkammer (5) und zum Abführen des gebrühten Kaffees aus der Brühkammer (5), **dadurch gekennzeichnet, dass** die Innenumfangswand des Brühzylinders (4) in einem Abschnitt der Brühkammer (5), in dem das Kaffeepulver (6) zu einem Kuchen verdichtbar ist, eine Querschnittsreduzierung (21) aufweist, an der sich der Querschnitt der Brühkammer (5) in Vorschubrichtung (19) verengt, und dass der Dichtabschnitt des ersten Verschlussteils (10) derart elastisch ausgestaltet ist, dass das erste Verschlussteil (10) in dem die Querschnittsreduzierung (21) aufweisenden Abschnitt der Brühkammer (4) positionierbar ist.

2. Einrichtung (2) nach Anspruch 1, **dadurch gekennzeichnet, dass** Querschnittsreduzierung (21) eine Schrägfläche aufweist, entlang welcher der Querschnitt der Brühkammer (5) in Vorschubrichtung (19) kontinuierlich und vorzugsweise stetig abnimmt.

3. Einrichtung (2) nach Anspruch 2, **dadurch gekennzeichnet, dass** die Schrägfläche in der Mantelfläche eines gedachten Kegels angeordnet ist, dessen Rotationsachse in der Zylinderachse (9) des Brühzylinders liegt.

4. Einrichtung (2) nach einem der Ansprüche 1 bis 3, **dadurch gekennzeichnet, dass** die Zylinderachse (9) des Brühzylinders (4) unter einem Neigungswinkel (α) gegenüber einer Horizontalebene geneigt ist, und dass der Neigungswinkel (α) derart an die Querschnittsreduzierung (21) angepasst ist, dass die Innenumfangswand des Brühzylinders (4) entlang einer Linie, die der senkrechten Projektion der Zylinderachse (9) des Brühzylinders (4) auf die die Innenumfangswand entspricht, im Bereich der Querschnittsreduzierung zum zweiten Zylinderende (8) hin abfällt.

5. Einrichtung (2) Anspruch 4, **dadurch gekennzeichnet, dass** der Neigungswinkel (α) zwischen der Zylinderachse (9) und der Horizontalebene kleiner als 89°, ggf. kleiner als 30°, insbesondere kleiner als 20°, gegebenenfalls kleiner als 10° ist und bevorzugt zwischen 1° und 7° beträgt.

6. Einrichtung (2) nach einem der Ansprüche 1 bis 5, **dadurch gekennzeichnet, dass** der Brühzylinder (4) am zweiten Zylinderende (8) eine Einführschräge (13) für das zweite Verschlussteil (11) aufweist, an welcher sich der Innenquerschnitt des Brühzylinders (4) zum zweiten Zylinderende (8) hin erweitert, und dass die Querschnittsreduzierung (21) zwischen der Einführschräge (13) und dem ersten Zylinderende (8) angeordnet ist.

7. Einrichtung (2) nach einem der Ansprüche 1 bis 6, **dadurch gekennzeichnet, dass** die Mittel zum Zuführen des Wassers in die Brühkammer (5) an dem einen Verschlussteils (10) ein mit einer Wasserzuleitung (25) verbundenes Einlasssieb (24) aufweisen, und/oder dass die Mittel zum Abführen des gebrühten Kaffees aus der Brühkammer (5) an dem zweiten Verschlussteil (11) ein Auslasssieb (26) aufweisen, durch welches der gebrühte Kaffee aus der Brühkammer (5) ableitbar ist.

8. Einrichtung (2) nach einem der Ansprüche 1 bis 7, **dadurch gekennzeichnet, dass** das erste Verschlussteil (10) an seiner Mantelfläche eine Kolbendichtung (28) aus einem Elastomerwerkstoff aufweist, und dass der Elastomerwerkstoff derart ausgestaltet ist, dass sich zumindest in einem Abschnitt der Kolbendichtung (28) deren Außenquerschnitt in Vorschubrichtung (19) erweitert.

9. Einrichtung (2) nach einem der Ansprüche 1 bis 8, **dadurch gekennzeichnet, dass** das erste Verschlussteil (10) an seiner Mantelfläche eine Kolbendichtung (28) aus einem Elastomerwerkstoff aufweist, und dass die Kolbendichtung (28) eine Hohlkammer begrenzt, die zum Andrücken der Kolbendichtung (28) an die Innenumfangswand des Brühzylinders (4) mit einem pneumatischen und/oder hydraulischen Druck beaufschlagbar ist.

10. Einrichtung (2) nach einem der Ansprüche 1 bis 9, **dadurch gekennzeichnet, dass** die Antriebsvorrichtung für jedes Verschlussteil (10, 11) jeweils einen hydraulischen Arbeitszylinder (23) aufweist, der mit seinem einen Ende mit dem betreffenden Verschlussteil (10, 11) und mit seinem anderen Ende mit dem Brühzylinder (4) verbunden ist.

11. Einrichtung (2) nach einem der Ansprüche 1 bis 10, **dadurch gekennzeichnet, dass** der Brühzylinder (4) mindestens eine seitliche Einfüllöffnung (14A, 14B) zum Einfüllen des Kaffeepulvers (6) aufweist, die von den Zylinderenden (7, 8) beabstandet ist.

## Claims

1. Device (2) for preparing coffee in an automatic coffee machine (1), comprising a brewing cylinder (4), having a first and a second cylinder end (7, 8), for receiving coffee powder (6), wherein two closure parts (10, 11) which can be displaced relative to one another in the cylinder axis (9) are associated with the brewing cylinder (4) in order to delimit a brewing chamber (5) and to compress coffee powder (6) which has been introduced, wherein a first closure part (10) closes the first cylinder end (7) and a second closure part (11) can assume, in addition to a closed position in which it closes the second cylinder end (8), an open position in order to clear the second cylinder end (8) for the purpose of ejecting the used coffee powder (6) through the first closure part (10), wherein at least the first closure part (10) is designed as a piston with a sealing section which comes into contact with an inner circumferential wall of the brewing cylinder (4), comprising a drive apparatus by means of which the closure parts (10, 11) can be moved back and forth relative to one another and relative to the brewing cylinder (4) in such a way that, for the purpose of compressing the coffee powder (6), one of the closure parts (10) can be moved in an advancing direction (19) relative to the brewing cylinder (4) in the direction of the other closure part (11), and comprising means for supplying water to the brewing chamber (5) and for discharging the brewed coffee from the brewing chamber (5), **characterized in that** the inner circumferential wall of the brewing cylinder (4) has a reduced cross section (21) in a section of the brewing chamber (5) in which the coffee powder (6) can be compressed to form a mass, the cross section of the brewing chamber (5) narrowing in the advancing direction (19) at said reduced cross section, and **in that** the sealing section of the first closure part (10) is configured in an elastic manner in such a way that the first closure part (10) can be positioned **in that** section of the brewing chamber (4) which has the reduced cross section (21).

2. Device (2) according to Claim 1, **characterized in that** the reduced cross section (21) has a sloping face along which the cross section of the brewing chamber (5) decreases continuously and preferably constantly in the advancing direction (19).

3. Device (2) according to Claim 2, **characterized in that** the sloping face is arranged in the lateral surface of an imaginary cone, the rotation axis of which imaginary cone lies in the cylinder axis (9) of the brewing cylinder.

4. Device (2) according to one of Claims 1 to 3, **characterized in that** the cylinder axis (9) of the brewing cylinder (4) is inclined at an inclination angle (α) with respect to a horizontal plane, and **in that** the inclination angle (α) is matched to the reduced cross section (21) in such a way that the inner circumferential wall of the brewing cylinder (4) drops along a line, which corresponds to the perpendicular projection of the cylinder axis (9) of the brewing cylinder (4) to the inner circumferential wall, in the direction of the second cylinder end (8) in the region of the reduced cross section.

5. Device (2) according to Claim 4, **characterized in that** the inclination angle (α) between the cylinder axis (9) and the horizontal plane is less than 89°, possibly less than 30°, in particular less than 20°, possibly less than 10° and is preferably between 1° and 7°.

6. Device (2) according to one of Claims 1 to 5, **characterized in that** the brewing cylinder (4) has, at the second cylinder end (8), an insertion slope (13) for the second closure part (11), at which insertion slope the inside cross section of the brewing cylinder (4) widens in the direction of the second cylinder end (8), and **in that** the reduced cross section (21) is arranged between the insertion slope (13) and the first cylinder end (8).

7. Device (2) according to one of Claims 1 to 6, **characterized in that** the means for supplying the water to the brewing chamber (5) have, on one closure part (10), an inlet screen (24) which is connected to a water feed line (25), and/or **in that** the means for discharging the brewed coffee from the brewing chamber (5) have, on the second closure part (11), an outlet screen (26) through which the brewed coffee can be conducted away from the brewing chamber (5).

8. Device (2) according to one of Claims 1 to 7, **characterized in that** the first closure part (10) has, on its lateral surface, a piston seal (28) composed of an elastomeric material, and **in that** the elastomeric material is designed in such a way that, at least in one section of the piston seal (28), the outside cross section widens in the advancing direction (19).

9. Device (2) according to one of Claims 1 to 8, **characterized in that** the first closure part (10) has, on its lateral surface, a piston seal (28) composed of an elastomeric material, and **in that** the piston seal (28) delimits a hollow chamber to which a pneumatic and/or hydraulic pressure can be applied for the purpose of pressing the piston seal (28) against the inner circumferential wall of the brewing cylinder (4).

10. Device (2) according to one of Claims 1 to 9, **characterized in that** the drive apparatus has in each case one hydraulic working cylinder (23) for each closure part (10, 11), which hydraulic working cylinder is connected, by way of one of its ends, to the closure part (10, 11) in question and, by way of its other end, to the brewing cylinder (4).

11. Device (2) according to one of Claims 1 to 10, **characterized in that** the brewing cylinder (4) has at least one lateral filling opening (14A, 14D) for introducing the coffee powder (6), which lateral filling opening is at a distance from the cylinder ends (7, 8).

## Revendications

1. Dispositif (2) de préparation de café dans une machine à café automatique (1), avec un cylindre d'infusion (4) présentant une première et une deuxième extrémité de cylindre (7, 8), pour recevoir du café en poudre (6), deux parties de fermeture (10, 11), pouvant être déplacées l'une par rapport à l'autre dans l'axe de cylindre (9), étant associées au cylindre d'infusion (4) afin de limiter une chambre d'infusion (5) et de comprimer du café en poudre (6) introduit, une première partie de fermeture (10) fermant la première extrémité de cylindre (7) et une deuxième partie de fermeture (11), en plus d'une position de fermeture dans laquelle elle ferme la deuxième extrémité de cylindre (8), pouvant adopter une position d'ouverture afin de libérer la deuxième extrémité de cylindre (8) pour éjecter le café en poudre (6) consommé à travers la première partie de fermeture (10), au moins la première partie de fermeture (10) étant réalisée sous forme de piston avec une portion d'étanchéité qui vient en appui contre une paroi périphérique intérieure du cylindre d'infusion (4), avec un dispositif d'entraînement au moyen duquel les parties de fermeture (10, 11) peuvent être déplacées d'avant en arrière l'une par rapport à l'autre et par rapport au cylindre d'infusion (4), de telle sorte que pour la compression du café en poudre (6), l'une des parties de fermeture (10) puisse être déplacée dans une direction d'avance (19) par rapport au cylindre d'infusion (4) dans la direction de l'autre partie de fermeture (11), et avec des moyens pour acheminer de l'eau à la chambre d'infusion (5) et pour évacuer le café infusé hors de la chambre d'infusion (5), **caractérisé en ce que** la paroi périphérique intérieure du cylindre d'infusion (4), dans une portion de la chambre d'infusion (5) dans laquelle le café en poudre (6) peut être comprimé pour former un gâteau, présente une réduction de section transversale (21) au niveau de laquelle la section transversale de la chambre d'infusion (5) se rétrécit dans la direction d'avance (19), et **en ce que** la portion d'étanchéité de la première partie de fermeture (10) est configurée de manière élastique de telle sorte que la première partie de fermeture (10) puisse être positionnée dans la portion de la chambre d'infusion (4) présentant la réduction de section transversale (21).

2. Dispositif (2) selon la revendication 1, **caractérisé en ce que** la réduction de section transversale (21) présente une surface oblique le long de laquelle la section transversale de la chambre d'infusion (5) diminue en continu et de préférence de manière constante dans la direction d'avance (19).

3. Dispositif (2) selon la revendication 2, **caractérisé en ce que** la surface oblique est disposée dans la surface d'enveloppe d'un cône imaginaire dont l'axe de rotation est situé dans l'axe de cylindre (9) du cylindre d'infusion.

4. Dispositif (2) selon l'une quelconque des revendications 1 à 3, **caractérisé en ce que** l'axe de cylindre (9) du cylindre d'infusion (4) est incliné par rapport à un plan horizontal suivant un angle d'inclinaison (α) et **en ce que** l'angle d'inclinaison (α) est adapté à la réduction de section transversale (21) de telle sorte que la paroi périphérique intérieure du cylindre d'infusion (4) diminue dans la région de la réduction de section transversale vers la deuxième extrémité de cylindre (8) le long d'une ligne qui correspond à la projection perpendiculaire de l'axe de cylindre (9) du cylindre d'infusion (4) sur la paroi périphérique intérieure.

5. Dispositif (2) selon la revendication 4, **caractérisé en ce que** l'angle d'inclinaison (α) entre l'axe de cylindre (9) et le plan horizontal est inférieur à 89°, éventuellement inférieur à 30°, en particulier inférieur à 20°, éventuellement inférieur à 10° et de préférence compris entre 1° et 7°.

6. Dispositif (2) selon l'une quelconque des revendications 1 à 5, **caractérisé en ce que** le cylindre d'infusion (4) présente au niveau de la deuxième extrémité de cylindre (8) un biseau d'introduction (13) pour la deuxième partie de fermeture (11) au niveau duquel la section transversale intérieure du cylindre d'infusion (4) s'élargit vers la deuxième extrémité de cylindre (8), et **en ce que** la réduction de section transversale (21) est disposée entre le biseau d'introduction (13) et la première extrémité de cylindre (8).

7. Dispositif (2) selon l'une quelconque des revendications 1 à 6, **caractérisé en ce que** les moyens pour acheminer l'eau à la chambre d'infusion (5) présentent au niveau de l'une des parties de fermeture (10) un filtre d'entrée (24) connecté à une conduite d'alimentation en eau (25), et/ou **en ce que** les moyens pour l'évacuation du café infusé hors de la chambre d'infusion (5) présentent au niveau de la deuxième partie de fermeture (11) un filtre de sortie (26) à travers lequel le café infusé peut être dirigé hors de la chambre d'infusion (5).

8. Dispositif (2) selon l'une quelconque des revendications 1 à 7, **caractérisé en ce que** la première partie de fermeture (10) présente au niveau de sa surface d'enveloppe un joint d'étanchéité de piston (28) en matériau élastomère, et **en ce que** le matériau élastomère est configuré de telle sorte qu'au moins une portion du joint d'étanchéité de piston (28) présente une section transversale extérieure s'élargissant dans la direction d'avance (19).

9. Dispositif (2) selon l'une quelconque des revendications 1 à 8, **caractérisé en ce que** la première partie de fermeture (10) présente au niveau de sa surface d'enveloppe un joint d'étanchéité de piston (28) en matériau élastomère, et **en ce que** le joint d'étanchéité de piston (28) délimite une chambre creuse qui peut être sollicitée avec une pression pneumatique et/ou hydraulique pour presser le joint d'étanchéité de piston (28) contre la paroi périphérique intérieure du cylindre d'infusion (4).

10. Dispositif (2) selon l'une quelconque des revendications 1 à 9, **caractérisé en ce que** le dispositif d'entraînement présente, pour chaque partie de fermeture (10, 11), à chaque fois un cylindre de travail hydraulique (23) qui est connecté par l'une de ses extrémités à la partie de fermeture concernée (10, 11) et par son autre extrémité au cylindre d'infusion (4).

11. Dispositif (2) selon l'une quelconque des revendications 1 à 10, **caractérisé en ce que** le cylindre d'infusion (4) présente au moins une ouverture de remplissage latérale (14A, 14B) pour l'introduction du café en poudre (6), qui est espacée des extrémités de cylindre (7, 8).
